# EUROPÄISCHE PATENTSCHRIFT

(11) **EP 3 801 804 B1**
(45) Veröffentlichungstag und Bekanntmachung des Hinweises auf die Patenterteilung: **24.12.2025**
(21) Anmeldenummer: 19725090.5
(22) Anmeldetag: 15.05.2019
(51) Int. Cl.: G01F 23/00, B01D 3/08, B01D 3/42

(54) **ROTATIONSVERDAMPFER UND VERFAHREN ZUR STEUERUNG EINES ROTATIONSVERDAMPFERS**
ROTATIVE EVAPORATOR AND METHOD TO CONTROL THE SAME
ÉVAPORATEUR ROTATIF ET MÉTHÔDE POUR LE CONTROLER

(30) Priorität: 01.06.2018 DE 102018113118
(43) Veröffentlichungstag der Anmeldung: 14.04.2021
(73) Patentinhaber: IKA - Werke GmbH & Co. KG, 79219 Staufen (DE)
(72) Erfinder: BAIER, Matthias, 79822 Titisee-Neustadt (DE); WIESLER, Armin, 79219 Staufen (DE)
(74) Vertreter: DTS Patent- und Rechtsanwälte PartmbB
(86) Internationale Anmeldenummer: PCT/EP2019/062440
(87) Internationale Veröffentlichungsnummer: WO 2019/228801

(56) Entgegenhaltungen:
- DE-A1- 102009 006 819
- DE-A1- 3 522 607
- DE-C2- 3 522 607
- US-A- 4 738 295

## Beschreibung

Die vorliegende Erfindung betrifft einen Rotationsverdampfer mit einem Verdampferkolben, einem Heizbad und einer Eintauchsteuervorrichtung, insbesondere einen Rotationsverdampfer mit einer Steuervorrichtung, und ein Verfahren zur Steuerung dieses Rotationsverdampfers.

In der WO 2010/043283 A1 ist ein Rotationsverdampfer mit einer Steuerung zur Steuerung der Destillationsmengenregelung vorgesehen. Aus der US 4 738 295 A sowie aus der DE 35 22 607 A1 sind Rotationsverdampfer bekannt.

In der DE 10 2009 006 819 A1 ist ein Rotationsverdampfer beschrieben, der eine Steuer- und Regeleinheit aufweist zur Steuerung des Rotationsantriebs, eines Heizbades bzw. eines Lifts über eine Fernbedienung, so dass ein Eingreifen durch den Bediener auch über einen räumlichen Abstand ermöglicht wird.

Nachteilig an den Rotationsverdampfern im Stand der Technik war empfunden worden, dass diese im Betrieb überwacht werden mussten, um gegebenenfalls eingreifen zu können.

Aufgabe der vorliegenden Erfindung war es daher, einen Rotationsverdampfer, der die Nachteile des Standes der Technik vermeidet, sowie ein Verfahren zu seinem Betrieb bereitzustellen.

Diese Aufgabe wird erfindungsgemäß gelöst durch die Merkmale der unabhängigen Ansprüche. Vorteilhafte Ausgestaltungen sind in den Unteransprüchen angegeben.

Insbesondere wird die Aufgabe gelöst durch einen Rotationsverdampfer umfassend einen Verdampferkolben und ein Heizbad, wobei der Verdampferkolben in das Heizbad eintauchbar ist, bevorzugt über einen Lift, mit dem der Verdampferkolben vertikal bewegbar ist, weiter umfassend eine Eintauchsteuervorrichtung zur Steuerung der Eintauchtiefe des Verdampferkolbens in das Heizbad, wobei die Eintauchsteuervorrichtung eingerichtet ist, den Pegel des Heizbades zu ermitteln und wobei die Eintauchsteuervorrichtung eingerichtet ist, die Eintauchtiefe des Verdampferkolbens in das Heizbad in Abhängigkeit vom Pegel des Heizbades zu steuern. Dabei ist die Eintauchsteuervorrichtung eingerichtet, den Grund des Heizbades zu ermitteln und die Eintauchtiefe des Verdampferkolbens in das Heizbad in Abhängigkeit vom Grund des Heizbades zu steuern. Dabei weist die Eintauchsteuervorrichtung Sensoren auf, über die der Pegel des Heizbades ermittelbar ist. Dabei umfasst der Rotationsverdampfer eine Verfahreinrichtung zur vertikalen Verfahrung des Verdampferkolbens und eine Einrichtung zur Verkippung des Verdampferkolbens gegenüber der Horizontalen.

Ein Rotationsverdampfer umfasst in der Regel einen Verdampferkolben, der in ein Heizbad eingetaucht werden kann. Dieser Eintauchvorgang kann aus einer Absenkung des Verdampferkolbens in das Heizbad und/oder einer Anhebung des Heizbades bestehen. Der Eintauchvorgang erfolgt bevorzugt über einen Lift, mit dem der Verdampferkolben vertikal bewegbar ist und damit in das unter dem Verdampferkolben angeordnete Heizbad eingetaucht werden kann. Bevorzugt ist vorgesehen, dass das Heizbad vertikal nach oben bewegbar ist und damit der Verdampferkolben in das Heizbad eingetaucht werden kann. Besonders bevorzugt ist der Verdampferkolben vertikal bewegbar und das Heizbad auch vertikal bewegbar. Die Eintauchtiefe des Verdampferkolbens in das Heizbad ist damit eine relative Größe, die sich aus der Absenkung des Verdampferkolbens und der Anhebung des Heizbades zusammensetzt. Der Verdampferkolben wird mit einem Rotationsantrieb um seine Längsachse rotiert und dadurch werden die in den Verdampferkolben eingeführten Komponenten temperaturabhängig verdampft. Diese verdampften Komponenten werden in einen Vertikalkühler geleitet und dort kondensiert und in einen mit diesem verbundenen Auffangkolben gesammelt. Für das Heizbad ist bevorzugt eine Steuereinheit vorgesehen, mit der die Temperatur des Heizbades geregelt werden kann. Bevorzugt kann auch ein Nachfüllvorrichtung vorgesehen sein, mit der das Medium des Heizbades, bevorzugt Wasser oder Öl, insbesondere Silikonöl, dosiert nachgefüllt werden kann. Damit ist es möglich, Verluste im Heizbad, die beispielsweise über die Zeit durch Verdunstung auftreten können, zu kompensieren, ohne dass der Verdampfungsprozess des Rotationsverdampfers unterbrochen werden muss. Bevorzugt weist der Rotationsverdampfer auch eine Steuereinheit auf, mit der die Rotation des Verdampferkolben gesteuert werden kann.

Der Rotationsverdampfer weist eine Eintauchsteuervorrichtung zur Steuerung der Eintauchtiefe des Verdampferkolbens in das Heizbad auf. Die Eintauchsteuervorrichtung umfasst bevorzugt einen Prozessor, über den der Eintauchvorgang gesteuert werden kann. Die Eintauchsteuervorrichtung kann auch zusammen mit weiteren Steuereinrichtungen, wie beispielsweise der Steuereinheit zur Regelung des Heizbades bzw. der Steuereinheit, mit der die Rotation des Verdampferkolben gesteuert werden kann, ausgebildet sein.

Die Eintauchsteuervorrichtung ist eingerichtet, den Pegel des Heizbades zu ermitteln. Der Pegel des Heizbades genauso wie das Füllniveau des Verdampferkolbens sind veränderbare Größen, da das Gemisch im Verdampferkolben durch die Verdampfung der zu entfernenden Komponente abnimmt und der Pegel des Heizbades durch Absenken des Verdampferkolbens in das Heizbad erhöht wird, da der Heizkolben um das Maß, in dem er in das Heizbad abgesenkt wird, den Pegel des Mediums im Heizbad durch Verdrängung erhöht. Gleichzeitig kann auch vorgesehen sein, dass im laufenden Betrieb weiteres Medium in das Heizbad geleitet wird, wodurch der Pegel des Heizbades ansteigt.

Die Eintauchsteuervorrichtung ist eingerichtet, die Eintauchtiefe des Verdampferkolbens in das Heizbad in Abhängigkeit vom Pegel des Heizbades zu steuern. Damit kann der Rotationsverdampfer automatisiert mit einer optimalen Eintauchtiefe des Verdampferkolbens im Heizbad betrieben werden, auch wenn sich der Pegel des Mediums im Heizbad verändert, insbesondere durch den Eintauchvorgang des Verdampferkolbens in das Heizbad der Pegel des Mediums im Heizbad durch Verdrängung ansteigt. Bei einem kleinen Kolben ist die Verdrängung geringer als bei einem großen Kolben und damit ist auch der Anstieg des Pegels des Mediums im Heizbad geringer. Diese Steuerung wird bevorzugt über einen Lift durchgeführt, über den der Verdampferkolben vertikal bewegbar ist und durch Steuerung des Lifts kann die Eintauchsteuervorrichtung die vorbestimmten bzw. optimale Eintauchtiefe realisieren bzw. steuern und auch regeln. Damit ist die Eintauchsteuervorrichtung in dieser Ausprägung auch eine Eintauchregelvorrichtung.

Der Pegel des Heizbades kann aufgrund der ursprünglich zugegebenen Menge an Heizmedium rechnerisch ermittelt werden oder auch durch Sensoren bestimmt werden.

Die Eintauchsteuervorrichtung ist zusätzlich eingerichtet, den Grund des Heizbades zu ermitteln und auch eingerichtet, die Eintauchtiefe des Verdampferkolbens in das Heizbad in Abhängigkeit vom Grund des Heizbades zu steuern.

Der Grund des Heizbades ist das tiefste Niveau im Heizbad. Bei einem Heizbad mit horizontaler Bodenplatte ist der Grund des Heizbades die obere Begrenzung dieser Bodenplatte. Unterhalb dieses Grunds des Heizbades kann der Verdampferkolben nicht abgesenkt werden, da er dann bereits mit dem Grund in Berührung käme und nicht weiter abgesenkt werden kann. Damit handelt es sich bei dem Grund des Heizbades um einen hilfreichen Parameter, um die Eintauchtiefe des Verdampferkolbens zu steuern.

Weiterhin bevorzugt ist die Eintauchsteuervorrichtung eingerichtet, das Füllniveau des Verdampferkolbens zu ermitteln und die Eintauchsteuervorrichtung (ist auch eingerichtet, die Eintauchtiefe des Verdampferkolbens in das Heizbad in Abhängigkeit vom Füllniveau des Verdampferkolbens zu steuern. Dies kann entweder nur in Kombination mit der Steuerung der Eintauchtiefe des Verdampferkolbens in das Heizbad in Abhängigkeit vom Pegel des Heizbades erfolgen oder auch in Abhängigkeit vom Grund des Heizbades.

Das Füllniveau des Verdampferkolbens ist das Niveau, mit dem der Verdampferkolben befüllt ist. Es ist das horizontale Niveau, das sich mit dem Gemisch, das sich bei Betrieb des Rotationsverdampfers im Verdampferkolben befindet, ausbildet. Dieses Niveau ist parallel zur Oberfläche der Flüssigkeit, die sich im Heizbad befindet und dort einen vorbestimmten Pegelstand aufweist.

Gleichzeitig kann auch vorgesehen sein, dass im laufenden Betrieb weiteres Gemisch in den Verdampferkolben zugeführt wird, was zu einer Erhöhung des Füllniveaus im Verdampferkolben führt.

Die Eintauchsteuervorrichtung ist bevorzugt eingerichtet, die Eintauchtiefe des Verdampferkolbens in das Heizbad in Abhängigkeit vom Füllniveau des Verdampferkolbens und in Abhängigkeit vom Pegel des Heizbades zu steuern. Damit kann der Rotationsverdampfer automatisiert mit einer optimalen Eintauchtiefe des Verdampferkolbens im Heizbad betrieben werden, auch wenn sich das Füllniveau im Verdampferkolben bzw. der Pegel des Mediums im Heizbad verändern. Diese Steuerung wird bevorzugt über einen Lift durchgeführt, über den der Verdampferkolben vertikal bewegbar ist und durch Steuerung des Lifts kann die Eintauchsteuervorrichtung die vorbestimmten bzw. optimale Eintauchtiefe realisieren bzw. steuern und auch regeln.

Das Füllniveau kann bei bekanntem Typ des Verdampferkolbens aufgrund der Befüllungsmenge am Anfang direkt rechnerisch ermittelt werden oder durch Sensoren (damit auch typunabhängig) bestimmt werden. Auch der Pegel des Heizbades kann aufgrund der ursprünglich zugegebenen Menge an Heizmedium rechnerisch ermittelt werden oder auch durch Sensoren bestimmt werden.

Ein bevorzugtes Ausführungsbeispiel des Rotationsverdampfers weist Sensoren auf, über die das Füllniveau des Verdampferkolbens und/ oder der Pegel des Heizbades ermittelbar sind. Die Sensoren funktionieren bevorzugt nach einem oder mehrerer der folgenden Prinzipien: optisch, mechanisch, thermoelektrisch, resistiv, piezoelektrisch, kapazitiv, induktiv, magnetisch. Bevorzugt werden für die Sensoren zur Ermittlung des Füllniveaus im Verdampferkolben optische, mechanische, thermoelektrische, resistive oder piezoelektrische Sensoren eingesetzt, mit denen das Füllniveau bevorzugt über die Optik oder das Gewicht oder die Leitfähigkeit ermittelt wird. Bevorzugt werden für die Sensoren zur Ermittlung des Pegels des Heizbades optische, mechanische, thermoelektrische, resistive, piezoelektrische, kapazitive, induktive oder magnetische Sensoren verwendet, mit denen der Pegelstand bevorzugt über die Optik oder das Gewicht oder die Feuchtigkeit oder die Leitfähigkeit ermittelt wird.

Bevorzugt weist der Rotationsverdampfer Sensoren auf, die eine oder mehrere Elemente der folgenden Gruppe aufweisen: Lichtschranke, bevorzugt eine analoge Lichtschranke, Gewichtssensor, Photosensor, Kamera, Infrarot **LED,** Ultraschallsensor, Mikrowellensender und -empfänger, Radarsensor, Feuchtigkeitssensor, Füllstandsmessgerät, Schwimmer, Niveau-Sensor, Vibrationssensor, elektromechanisches Lotsystem, Drucksensor, Leitfähigkeitssensor, Temperatursensor.

Mittels einer Lichtschranke kann das Füllniveau bevorzugt dadurch ermittelt werden, dass der befüllte Kolben über den Lift an der Lichtschranke vorbei geführt wird und dabei das Füllniveau ermittelt werden kann. Bevorzugt ist es auch möglich, die Lichtschranke zu bewegen und dabei das Füllniveau zu detektieren. Besonders bevorzugt wird eine analoge Lichtschranke verwendet.

Mittels eines Gewichtssensors kann das Gewicht des Heizbades, bzw. das Gewicht des Verdampferkolbens und damit die Verdampferkolbengröße detektiert werden. Dadurch ist es möglich, das Füllniveau zu bestimmen oder auch durch die Zunahme des Gewichts des Heizbades bei Eintauchen des Verdampferkolbens aufgrund der Verdrängung den Anstieg des Pegels des Heizbades zu bestimmen. Außerdem ist es auch möglich, das Gewicht (oder den Pegel) der verdampften Komponente, die im Auffangkolben gesammelt wurde, zu bestimmen und über Differenzbetrachtungen zum aktuellen Füllniveau im Verdampferkolben Rückschlüsse zu ziehen.

Durch einen Photosensor, insbesondere durch eine Kamera, ist es möglich, ein Bild zu erfassen, das ausgewertet werden kann, um das Füllniveau zu detektieren. Ebenso ist es auf diese Weise möglich, den Pegel des Heizbades zu bestimmen. Besonders bevorzugt weist das Heizbad hierfür zumindestens teilweise einen transparenten Bereich auf, durch den der Pegel des Mediums im Heizbad optisch zu erkennen ist. Dies kann beispielsweise durch Ausbildung des Heizbades in transparenter Bauweise (Glas/ Acryl/ etc.) erfolgen, so dass die gesamte Seitenwand, auf die beispielsweise die Kamera gerichtet ist, transparent ausgebildet ist oder zumindest ein Streifen an der Wandung des Heizbades, bevorzugt in vertikaler Richtung transparent ausgebildet ist, so dass der Pegel von außen optisch erkennbar ist. Besonders bevorzugt wird hierbei auch eine Markierung angebracht, die ein Ablesen des Pegels bzw. ein Auswerten des Betrages des Pegels erleichtert.

Infrarot LEDs können zur Detektion des Füllstandes und des Pegels ebenfalls genutzt werden, beispielsweise in Form von Lichtschranken oder Bewegungsmeldern. Ebenfalls sind hierfür Ultraschallsensoren, Mikrowellensender und - empfänger oder Radarsensoren geeignet.

Über einen Feuchtigkeitssensor, der bevorzugt vertikal im Heizbad angeordnet ist, kann der Pegel im Heizbad ermittelt werden. Dies ist auch über ein Füllstandsmessgerät anderer Bauart möglich, beispielsweise eine Füllstandsmessgerät, das mit einem Schwimmer oder Niveau-Sensor ausgerüstet ist. Dies kann auch einen Vibrationssensor oder ein elektromechanisches Lotsystem umfassen.

Über einen Drucksensor kann das Gewicht ermittelt werden und dadurch auf den Pegel bzw. den Füllstand geschlossen werden. Über einen Leitfähigkeitssensor, bevorzugt am Rande des Heizbades angeordnet, kann der Pegel des Heizbades ermittelt werden.

Ferner ist eine Verfahreinrichtung zur vertikalen Verfahrung des Verdampferkolbens, insbesondere eine in einen Lift integrierte Verfahreinrichtung vorgesehen.

Durch einen solchen Lift kann der Verdampferkolben vertikal in das Heizbad abgesenkt werden. Zusätzlich kann der Verdampferkolben in seiner Befestigung an dem Rotationsverdampfer einen Winkel zur Horizontalen einnehmen, bevorzugt sind das ca. 30°. Über den Lift wird der Verdampferkolben insgesamt vertikal bewegt, ohne dass der Winkel des Verdampferkolbens zur Horizontalen hierbei geändert wird. Damit ist mittels der Verfahrung über den Lift ein Absenken des Verdampferkolbens in das Heizbad möglich, so dass bevorzugt der Lift angesteuert wird, um den Verdampferkolben in das Heizbad abzusenken und wieder hochzufahren.

Bevorzugt ist es auch möglich, die Eintauchtiefe des Verdampferkolbens durch Veränderung des Winkels des Verdampferkolbens zur Horizontalen zu verändern. Somit kann durch Abkippen des Verdampferkolbens in das Heizbad die Eintauchtiefe verändert werden.

Die Aufgabe der vorliegenden Erfindung wird auch durch ein Verfahren zur Steuerung eines Rotationsverdampfers gelöst, wobei der Rotationsverdampfer einen Verdampferkolben und ein Heizbad umfasst, wobei der Verdampferkolben in das Heizbad eintauchbar ist, bevorzugt über einen Lift, mit dem der Verdampferkolben vertikal bewegbar ist, weiter umfassend eine Eintauchsteuervorrichtung zur Steuerung der Eintauchtiefe des Verdampferkolbens in das Heizbad, mit den Schritten:
- Ermitteln des Füllniveaus des Verdampferkolbens
- Ermitteln des Pegels des Heizbades
- Steuerung der Eintauchtiefe des Verdampferkolbens in das Heizbad in Abhängigkeit vom Füllniveau des Verdampferkolbens (10) und in Abhängigkeit vom Pegel des Heizbades
- Ermitteln des Grunds des Heizbades
- Steuerung der Eintauchtiefe des Verdampferkolbens in das Heizbad in Abhängigkeit vom Grund des Heizbades,
- Ermitteln des Pegels des Heizbades durch einen Sensor und
vertikales Verfahren und Verkippung des Verdampferkolbens gegenüber der Horizontalen in Abhängigkeit vom Pegel des Heizbades.

Der Pegel des Heizbades ist die Oberfläche des Mediums im Heizbad. Dieser ist aufgrund der Schwerkraft horizontal ausgerichtet.

Durch die Ermittlung des Pegels des Heizbades ist bekannt, auf welchem Niveau bzw. in welcher Höhe sich die Oberfläche des Mediums im Heizbad befindet.

**In** Abhängigkeit von dieser Größe findet nun die Steuerung der Eintauchtiefe des Verdampferkolbens statt. Bevorzugt wird hierbei beispielsweise ein maximaler Pegel bestimmt, der nicht überschritten werden darf und bei Erreichen dieses maximalen Pegels wird der Verdampferkolben nicht weiter abgesenkt, um keine weitere Erhöhung des Pegels des Mediums im Heizbad zu bewirken. Es ist auch möglich, zusätzlich durch Ablassen von Medium im Heizbad den Pegel zu erniedrigen und dann ist das Absenken des Verdampferkolbens weiter möglich.

Von dem Verfahren sind die Schritte umfasst:
Ermitteln des Grunds des Heizbades
Steuerung der Eintauchtiefe des Verdampferkolbens in das Heizbad in Abhängigkeit vom Grund des Heizbades.

Hierdurch kann das Absenken des Verdampferkolbens zusätzlich unter Berücksichtigung des niedrigsten Wertes gesteuert werden, den der Kolben nicht unterschreiten sollte, da er sonst durch Berührung mit dem Grund bzw. Boden des Heizbades Schaden nehmen könnte.

Weiter bevorzugt sind weiterhin die Schritte umfasst:
Ermitteln des Füllniveaus des Verdampferkolbens
Steuerung der Eintauchtiefe des Verdampferkolbens in das Heizbad in Abhängigkeit vom Füllniveau des Verdampferkolbens.

Diese Schritte können entweder in Kombination mit der Steuerung in Abhängigkeit vom Grund des Heizbades oder ohne diese erfolgen.

Das Füllniveau ist das obere Niveau, das das Gemisch in dem Verdampferkolben ausbildet. Es erstreckt sich parallel zur Oberfläche des Mediums im Heizbades, d.h. dem Pegel des Heizbades. Beide sind aufgrund der Schwerkraft horizontal ausgerichtet.

Durch die Ermittlung des Füllniveaus ist bezogen auf den Verdampferkolben einerseits und der bekannten Höhe des Verdampferkolbens über dem Boden des Heizbades andererseits auch in Bezug auf diese Referenz des Bodens des Heizbades bekannt, auf welchem Niveau, d.h. auf welcher Höhe sich diese obere Kante bzw. Begrenzung des Gemischs innerhalb des Verdampferkolbens befindet.

**In** Abhängigkeit von diesen beiden Größen findet nun die Steuerung der Eintauchtiefe des Verdampferkolbens statt. Bevorzugt wird hierbei beispielsweise eine Zielkonstellation gewählt, bei der das Füllniveau des Verdampferkolbens um einen vorbestimmten Betrag unterhalb des Pegels des Heizbades zu liegen kommt. Bevorzugt beträgt dieser vorbestimmte Betrag zwischen 0,5 und 2 cm, besonders bevorzugt zwischen 0,8 und 1,2 cm, ganz besonders bevorzugt ca. 1 cm. **In** dieser Konstellation wird durch das Heizbad ein Bereich des Verdampferkolbens oberhalb des Füllniveaus aber unterhalb des Pegels unmittelbar durch das Heizbad-medium geheizt, bevor dieser Bereich des Verdampferkolbens bei der Rotation mit dem Gemisch im Verdampferkolben in Berührung kommt und andererseits auf der anderen Seite des Verdampferkolbens durch Mitnahme des Gemischs aufgrund der Adhäsion in einem besonders beheizten Bereich geführt, so dass es hier besonders gut zur Verdampfung der zu trennenden Komponente aus dem Gemisch kommen kann.

Bevorzugt kann bei der Steuerung auch auf Änderungen im Füllniveau und/ oder des Pegels reagiert werden, so dass auch im laufenden Betrieb die Eintauchtiefe so nachgeführt werden kann, dass die Zielkonstellation erreicht wird. Hierbei kann bevorzugt auch beachtet werden, dass ein Mindestabstand der unteren Begrenzung des Verdampferkolbens zum Boden des Heizbades eingehalten wird. Wenn dieser droht, unterschritten zu werden, kann die Steuereinrichtung bevorzugt die Zugabe von Medium des Heizbades dosieren, so dass der Pegel im Heizbad wieder ansteigt und damit die Eintauchtiefe verringert werden kann, so dass der Abstand zum Boden wieder sichergestellt werden kann. Bevorzugt wird auch ein Mindestabstand zwischen dem oberen Rand des Heizbades und dem Hals des Verdampferkolbens sichergestellt, d.h. ein Bereich, der nicht in das Heizbad eingetaucht ist.

Bevorzugt wird hierbei das Füllniveau bzw. der Pegel des Heizbades kontinuierlich überwacht oder zumindest in vorbestimmbaren Zeitintervallen ermittelt, so dass auf Änderungen im Füllniveau (durch Verdampfen der Komponente im Gemisch) sowie den Pegel (durch Verdunstung des Mediums des Heizbades) reagiert werden kann.

Das Verfahren weist den folgenden Schritt auf:
Ermitteln des Pegels des Heizbades durch einen Sensor.

Bevorzugt weist das Verfahren die folgenden Schritte auf:
Ermitteln des Füllniveaus des Verdampferkolbens durch einen Sensor, und
Steuerung der Eintauchtiefe des Verdampferkolbens in das Heizbad in Abhängigkeit vom Füllniveau des Verdampferkolbens und in Abhängigkeit vom Pegel des Heizbades.

Durch die Ermittlung des Füllniveaus bzw. des Pegels über einen Sensor stehen mehrere technische Realisierungsmöglichkeiten zur Verfügung. Bevorzugt wird hierbei auf optische Sensoren zurückgegriffen, wie beispielsweise eine Lichtschranke oder ein Photoelement oder eine Kamera.

**In** einem weiteren bevorzugten Verfahren ist der weitere Schritt vorgesehen: Nachdosierung von Medium für das Heizbad in Abhängigkeit vom Füllniveau des Verdampferkolbens.

Hierdurch ist es möglich, nach einer über die Zeit erfolgte Verdampfung bzw. Verlust des Mediums für das Heizbad, dieses nachzudosieren, so dass diese Verluste kompensiert werden.

Eine Nachdosierung kann auch darin bestehen, dass Medium für das Heizbad abgezogen wird, wenn beispielsweise durch den Eintauchvorgang des Verdampferkolbens der Pegel des Heizbades über einen vorbestimmten Wert ansteigt, so dass ein Überlaufen des Heizbades verhinderbar ist.

Weitere Einzelheiten und Vorteile der Erfindung sollen nun anhand eines in den Zeichnungen dargestellten Ausführungsbeispiels näher erläutert werden.

Es zeigen:

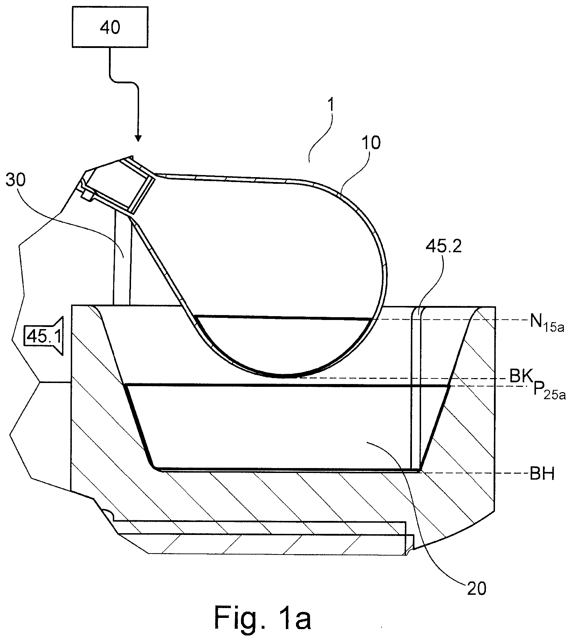

- Fig. 1a: eine schematische Darstellung eines Verdampferkolbens und eines Heizbades eines Rotationsverdampfers in einer Ausgangsposition und

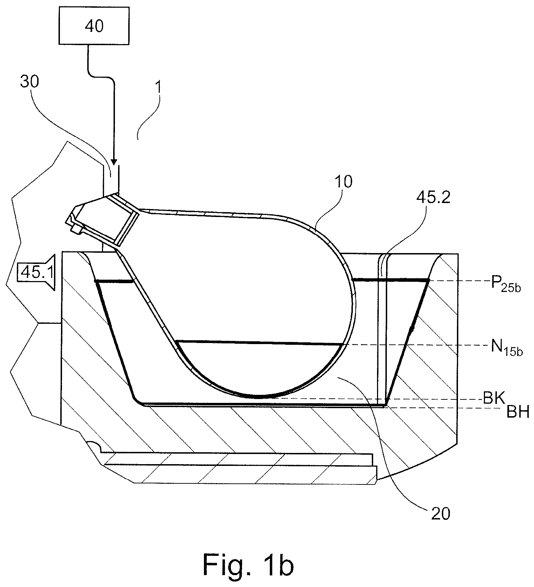

- Fig. 1b: eine schematische Darstellung eines Verdampferkolbens und eines Heizbades eines Rotationsverdampfers aus Figur 1a in einer abgesenkten Position.

Figur 1a ist eine schematische Darstellung eines Verdampferkolbens 10 und eines Heizbades 20 eines Rotationsverdampfers 1 in einer Ausgangsposition, in der sich der Verdampferkolben 10 oberhalb des Heizbades 20 befindet und nicht in dieses eintaucht.

Der Rotationsverdampfer 1, von dem hier nur ein Ausschnitt dargestellt ist, der vor allem den Verdampferkolben 10 und das Heizbad 20 sowie einen Lift 30 zeigt, weist auch eine Eintauchsteuervorrichtung 40 auf. Diese ist mit dem Rotationsverdampfer per Draht oder über Funkstrecke bzw. drahtlos verbunden. Durch diese Eintauchsteuervorrichtung 40 ist der Verdampferkolben 10 mittels des Lifts 30 vertikal verfahrbar, so dass die Eintauchtiefe des Verdampferkolbens 10 in das Heizbad 20 gesteuert werden kann. Das Füllniveau des Gemisches im Verdampferkolben 10 ist rechts mit dem Bezugszeichen N15a angegeben und bezeichnet die Oberkante des Gemisches in dem Verdampferkolben 10. Die untere Begrenzung des Verdampferkolbens ist mit dem Bezugszeichen BK angegeben und bezeichnet das Niveau auf dem sich der Boden des Kolbens befindet. Der Pegel des Mediums im Heizbad 20 in der Konstellation der Figur 1a wird mit dem Bezugszeichen P25a angegeben. Es ist der Pegel des Mediums im Heizbad, der sich einstellt, wenn der Kolben nicht in das Heizbad eingetaucht ist. Dies ist der minimale Pegel, da ein Eintauchen des Kolbens in das Heizbad diesen Pegel immer erhöhen wird.

Es sind zwei Sensoren 45.1 und 45.2 dargestellt, die das Füllniveau N15a und den Pegel P25a erfassen. Der Sensor 45.1 ist bevorzugt ein optischer Sensor, insbesondere eine Kamera, die das Füllniveau N15a ermittelt. Außerdem kann über den Sensor 45.1 auch die Position des Bodens des Kolbens BK ermittelt werden. Der Sensor 45.1 kann ebenfalls eingerichtet sein, den Pegel P25a des Heizbades zu ermitteln. Alternativ oder ergänzend kann auch ein Sensor 45.2 vorgesehen sein, der hier als Niveausensor ausgebildet ist und den Füllstand des Heizbades bzw. den Pegel des Heizbades P25a ermittelt.

Figur 1b ist eine schematische Darstellung eines Verdampferkolbens 10 und eines Heizbades 20 eines Rotationsverdampfers 1 wie in Figur 1a gezeigt, allerdings in einer abgesenkten Position.

Ausgehend von der Situation in Figur 1a hat die Eintauchsteuervorrichtung 40 über die Ansteuerung des Lifts 30 den Verdampferkolben 10 vertikal nach unten in das Heizbad abgesenkt. Hierdurch ist das Füllniveau N15b innerhalb des Verdampferkolbens 10 absolut niedriger zu liegen gekommen. Durch das Eintauchen des Verdampferkolbens 10 in das Heizbad 20 ist der Pegel des Heizbades P25b erhöht worden, da der Kolben Medium des Heizbades 20 verdrängt hat. Der Boden BK des Verdampferkolbens 10 ist ebenfalls abgesenkt worden und liegt nun noch oberhalb des Bodens BH des Heizbades 20. Allerdings ist der Abstand zwischen dem Boden BK des Verdampferkolbens 10 und dem Bodens BH des Heizbades 20 gegenüber der Ausgangssituation in Figur 1a verringert worden. Die Eintauchsteuervorrichtung 40 hat dabei den Verdampferkolben 10 über den Lift 30 so weit abgesenkt, dass die Differenz zwischen dem Niveau N15b und dem Pegel P25b einen vorbestimmten Wert erreicht, im vorliegenden Fall -1cm.

Wenn beim Absenken des Verdampferkolbens 10 nun der Pegel des Heizbades P25b zu weit ansteigt und zu befürchten ist, dass das Heizbad überläuft, so kann dies durch Detektion des Pegels erkannt und durch die Steuerung verhindert werden.

Wenn nun im Laufe des Betriebs sich der Pegel P25b oder das Niveau N15b ändern, so kann über die Eintauchsteuervorrichtung 40 die Eintauchtiefe geändert werden, so dass die Differenz zwischen dem Niveau N15b und dem Pegel P25b wieder den gewünschten Wert erreicht. Dies kann bei kontinuierlicher Verdampfung einer Komponente aus dem Gemisch im Verdampferkolben 10 dadurch bewerkstelligt werden, dass bei fallendem Füllniveau P25b der Verdampferkolben 10 vertikal nach oben verfahren wird, so dass die Differenz zwischen dem Niveau N15b und dem Pegel P25b wieder den vorbestimmten Wert erreicht. Sollte übermäßig viel Medium aus dem Heizbad 20 verdunsten, ist es auch möglich, Medium in das Heizbad 20 nachzufüllen, so dass der Pegel P25b wieder steigt - gegebenenfalls muss hier dann auch wieder über ein Anheben des Verdampferkolbens 10 über den Lift 30 ein zu hoher Pegel P25b kompensiert werden, so dass zwischen dem Niveau N15b und dem Pegel P25b wieder der vorbestimmte Wert erreicht wird. Bevorzugt kann auch zusätzlich Medium in das Heizbad 20 zugeführt werden, wenn der Abstand zwischen dem Boden BK des Verdampferkolbens 10 und dem Boden BH des Heizbades 20 einen kritischen Wert unterschreitet, da dann ebenfalls ein Anheben des Verdampferkolbens 10 erfolgt, um die gewünschte Differenz wieder herzustellen.

Typischerweise befindet sich der Lift vor einer Destillation in der oberen Position. Hat der Anwender den Kolben 10 (mit Gemisch) aufgesetzt fährt er ihn nach unten in das Heizbad 20. Empfohlen wird hierbei, dass der Kolben 10 maximal zu 50% gefüllt ist (1000 ml Kolben -> 500 ml Gemisch). Die optimale Eintauchtiefe ist bevorzugt dann erreicht, wenn sich das Füllniveau des Verdampferkolbens N15b ca. 1 cm, bevorzugt ca. 2 cm, besonders bevorzugt mehr als 3 cm unterhalb des Heizbadniveaus P25b befindet.

Die Eintauchsteuervorrichtung 40 berücksichtigt bevorzugt ebenfalls, dass der Kolben nicht am Grund BH des Heizbades 20 aufliegt. Die optimale Eintauchtiefe ist daher abhängig von dem verwendeten Verdampferkolben, dem befüllten Volumen sowie dem Pegel des Mediums im Heizbad 20.

Durch die hier beschriebene Erfindung kann ein Rotationsverdampfer bereitgestellt werden, der eine einfache Bedienung ermöglicht. Durch den erfindungsgemäßen Rotationsverdampfer muss der Anwender lediglich den Kolben aufsetzten und Start drücken. Das System kann dann anschließend über die Eintauchsteuervorrichtung selbstständig ohne weiteren Input wie die Kolbengröße, Füllvolumen, Heizbad-Zustand auf die optimale Eintauchtiefe fahren.

Durch die eingesetzten Sensoren sind über eine Vielzahl von Wirkmechanismen entsprechende Eintauchsteuervorrichtungen realisierbar. Sobald der Verdampferkolben in das Heizmedium eintaucht steigt hier der Spiegel des Mediums im Heizbad, im vorliegenden Beispiel also der Wasserspiegel. Das lässt sich bevorzugt mittels eines Niveau-Sensors überwachen. Der Niveauanstieg ergibt mit dem gefahrenen Weg ein verdrängtes Volumen aus dem sich die Kolbengröße errechnen lässt.

Sobald der Verdampferkolben in das Heizmedium eintaucht, entsteht auch eine Auftriebskraft. Die Auftriebskraft entspricht der Gewichtskraft des verdrängten Wasser. Mittels Kraftsensoren in den Füßen des Heizbades (Waage) lässt sich damit eine Gewichtszunahme detektieren. Auch hier kann im Zusammenhang mit dem gefahrenen Weg Rückschluss auf die Kolbengröße gezogen werden.

Bevorzugt ist vorgesehen, dass der Verdampferkolben auf dem Weg ins Heizbad durch eine Lichtschranke hindurchfährt. Mit einer Lichtschranke, bevorzugt einer analogen Lichtschranke, ist es möglich über die Form der Kurve auf den Kolben und das Volumen innerhalb des Kolben rückzuschließen und damit das Füllniveau im Verdampferkolben zu ermitteln.

Die Eintauchsteuervorrichtung kann bevorzugt auch weitere Zustände überwachen und bei der Steuerung berücksichtigen, wie beispielsweise Trockenlauf, Überlauf des Heizbades und die Steuerung der Zufuhr (oder Entnahme) von Heizbad-Medium.

Damit ist ein Rotationsverdampfer bereitgestellt worden, der durch seine Steuerung eine vereinfachte Bedienung ermöglicht, insbesondere eine Steuerung, die auf sich ändernde Gegebenheiten bei der Änderung des Pegels von Medium aus dem Heizbad oder auf eine Änderung des Füllniveaus in dem Verdampferkolben selbstständig reagieren kann.

### Bezugszeichenliste

- 1: Rotationsverdampfer
- 10: Verdampferkolben
- 15: Füllniveau des Verdampferkolbens
- 20: Heizbad
- 25: Pegel des Heizbades
- 30: Lift
- 35: Verfahreinrichtung zur vertikalen Verfahrung des Verdampferkolbens
- 40: Eintauchsteuervorrichtung
- 45: Sensor

## Patentansprüche

1. Rotationsverdampfer (1) umfassend einen Verdampferkolben (10) und ein Heizbad (20), wobei der Verdampferkolben (10) in das Heizbad (20) eintauchbar ist, weiter umfassend eine Eintauchsteuervorrichtung (40) zur Steuerung der Eintauchtiefe des Verdampferkolbens (10) in das Heizbad (20), wobei die Eintauchsteuervorrichtung (40) eingerichtet ist, den Pegel (25) des Heizbades (20) zu ermitteln und
wobei die Eintauchsteuervorrichtung (40) eingerichtet ist, die Eintauchtiefe des Verdampferkolbens (10) in das Heizbad (20) in Abhängigkeit vom Pegel (25) des Heizbades (20) zu steuern
wobei die Eintauchsteuervorrichtung (40) eingerichtet ist, den Grund des Heizbades (20) zu ermitteln und
wobei die Eintauchsteuervorrichtung (40) eingerichtet ist, die Eintauchtiefe des Verdampferkolbens (10) in das Heizbad (20) in Abhängigkeit vom Grund des Heizbades (20) zu steuern,
wobei die Eintauchsteuervorrichtung (40) Sensoren (45) aufweist, über die der Pegel (25) des Heizbades (20) ermittelbar ist,
wobei der Rotationsverdampfer (1) eine Verfahreinrichtung (35) zur vertikalen Verfahrung des Verdampferkolbens (10) und eine Einrichtung zur Verkippung des Verdampferkolbens (10) gegenüber der Horizontalen umfasst.

2. Rotationsverdampfer (1) nach Anspruch 1, wobei die Eintauchsteuervorrichtung (40) eingerichtet ist, das Füllniveau (15) des Verdampferkolbens (10) zu ermitteln und
wobei die Eintauchsteuervorrichtung (40) eingerichtet ist, die Eintauchtiefe des Verdampferkolbens (10) in das Heizbad (20) in Abhängigkeit vom Füllniveau (15) des Verdampferkolbens (10) zu steuern.

3. Rotationsverdampfer (1) nach einem der vorhergehenden Ansprüche, wobei die Eintauchsteuervorrichtung (40) Sensoren (45) aufweist, über die ferner das Füllniveau (15) des Verdampferkolbens (10) des Heizbades (20) ermittelbar ist.

4. Rotationsverdampfer (1) nach Anspruch 3, wobei die Sensoren (45) nach einem oder mehrerer der folgenden Prinzipien funktionieren: optisch, mechanisch, thermoelektrisch, resistiv, piezoelektrisch, kapazitiv, induktiv, magnetisch.

5. Rotationsverdampfer (1) nach einem der Ansprüche 3 oder 4, wobei die Sensoren (45) eine oder mehrere Elemente der folgenden Gruppe aufweisen: Lichtschranke, Gewichtssensor, Photosensor, Kamera, Infrarot LED, Ultraschallsensor, Mikrowellensender und -empfänger, Radarsensor, Feuchtigkeitssensor, Füllstandsmessgerät, Schwimmer, Niveau-Sensor, Vibrationssensor, elektromechanisches Lotsystem, Drucksensor, Leitfähigkeitssensor, Temperatursensor.

6. Verfahren zur Steuerung eines Rotationsverdampfer (1), wobei der Rotationsverdampfer einen Verdampferkolben (10) und ein Heizbad (20) umfasst, wobei der Verdampferkolben (10) in das Heizbad (20) eintauchbar ist, weiter umfassend eine Eintauchsteuervorrichtung (40) zur Steuerung der Eintauchtiefe des Verdampferkolbens (10) in das Heizbad (20), mit den Schritten:
Ermitteln des Füllniveaus (15) des Verdampferkolbens (10)
Ermitteln des Pegels (25) des Heizbades (20)
Steuerung der Eintauchtiefe des Verdampferkolbens (10) in das Heizbad (20) in Abhängigkeit vom Füllniveau (15) des Verdampferkolbens (10) und in Abhängigkeit vom Pegel (25) des Heizbades (20),
Ermitteln des Grunds des Heizbades
Steuerung der Eintauchtiefe des Verdampferkolbens in das Heizbad in Abhängigkeit vom Grund des Heizbades,
Ermitteln des Pegels (25) des Heizbades (20) durch einen Sensor (45') und vertikales Verfahren und Verkippung des Verdampferkolbens (10) gegenüber der Horizontalen in Abhängigkeit vom Pegel (25) des Heizbades (20).

7. Verfahren zur Steuerung eines Rotationsverdampfer (1) nach Anspruch 8, wobei die Eintauchsteuervorrichtung (40) Sensoren (45) aufweist, und das Verfahren die folgenden Schritte aufweist:
Ermitteln des Füllniveaus (15) des Verdampferkolbens (10) durch einen Sensor (45),
Steuerung der Eintauchtiefe des Verdampferkolbens (10) in das Heizbad (20) in Abhängigkeit vom Füllniveau (15) des Verdampferkolbens (10) und in Abhängigkeit vom Pegel (25) des Heizbades (20).

8. Verfahren nach einem der vorhergehenden Verfahrensansprüche weiter umfassend die Schritte:
Ermitteln des Füllniveaus des Verdampferkolbens
Steuerung der Eintauchtiefe des Verdampferkolbens in das Heizbad in Abhängigkeit vom Füllniveau des Verdampferkolbens.

9. Verfahren nach einem der vorherigen Ansprüche weiter aufweisend den Schritt: Nachdosierung von Medium für das Heizbad in Abhängigkeit vom Füllniveau des Verdampferkolbens und/oder in Abhängigkeit vom Pegel des Heizbades.

## Claims

1. A rotary evaporator (1) comprising an evaporator flask (10) and a heated bath (20), wherein the evaporator flask (10) can be immersed in the heated bath (20), further comprising an immersion control unit (40) for controlling the immersion depth of the evaporator flask (10) in the heated bath (20), wherein the immersion control unit (40) is set up so as to determine the level (25) of the heated bath (20), and
wherein the immersion control unit (40) is arranged so as to control the immersion depth of the evaporator flask (10) in the heated bath (20) as a function of the level (25) of the heated bath (20)
wherein the immersion control unit (40) is arranged so as to determine the base of the heated bath (20) and
wherein the immersion control unit (40) is arranged so as to control the immersion depth of the evaporator flask (10) in the heated bath (20) as a function of the base of the heated bath (20),
wherein the immersion control unit (40) comprises sensors (45) via which the level (25) of the heated bath (20) can be determined,
wherein the rotary evaporator (1) comprises a traversing unit (35) for vertically moving the evaporator flask (10) and a unit for tilting the evaporator flask (10) with respect to the horizontal plane.

2. The rotary evaporator (1) according to claim 1, wherein the immersion control unit (40) is set up so as to determine the filling level (15) of the evaporator flask (10), and
wherein the immersion control unit (40) is set up so as to control the immersion depth of the evaporator flask (10) in the heated bath (20) as a function of the filling level (15) of the evaporator flask (10).

3. The rotary evaporator (1) according to any of the preceding claims, wherein the immersion control unit (40) comprises sensors (45), via which the filling level (15) of the evaporator flask (10) and of the heated bath (20) can be determined.

4. The rotary evaporator (1) according to claim 3, wherein the sensors (45) operate according to one or a plurality of the following principles: optical, mechanical, thermoelectric, resistive, piezoelectric, capacitive, inductive, magnetic.

5. The rotary evaporator (1) according to any of the claims 3 or 4, wherein the sensors (45) comprise one or a plurality of elements of the following group: Light barrier, weight sensor, photo sensor, camera, infrared LED, ultrasonic sensor, microwave transmitter and receiver, radar sensor, humidity sensor, level measuring unit, float gauge, level sensor, vibration sensor, electromechanical plumb bob system, pressure sensor, conductivity sensor, temperature sensor.

6. A method for controlling a rotary evaporator (1), wherein the rotary evaporator comprises an evaporator flask (10) and a heated bath (20), wherein the evaporator flask (10) can be immersed in the heated bath (20), further comprising an immersion control unit (40) for controlling the immersion depth of the evaporator flask (10) in the heated bath (20), with the steps:Determination of the filling level (15) of the evaporator flask (10)Determination of the level (25) of the heated bath (20)
Control of the immersion depth of the evaporator flask (10) in the heated bath (20) as a function of the filling level (15) of the evaporator flask (10) and as a function of the level (25) of the heated bath (20),Determination of the base of the heated bath
Control of the immersion depth of the evaporator flask in the heated bath as a function of the base of the heated bath,Determination of the level (25) of the heated bath (20) via a sensor (45') and vertical movement and tilting of the evaporator flask (10) relative to the horizontal plane as a function of the level (25) of the heated bath (20).

7. A method of controlling a rotary evaporator (1) according to claim 8, wherein the immersion control unit (40) comprises sensors (45), and the method comprises the following steps:
Determination of the filling level (15) of the evaporator flask (10) via a sensor (45),
Control of the immersion depth of the evaporator flask (10) in the heated bath (20) as a function of the filling level (15) of the evaporator flask (10) and as a function of the level (25) of the heated bath (20).

8. A method according to any of the preceding method claims further comprising the steps:
Determination of the filling level of the evaporator flask
Control of the immersion depth of the evaporator flask in the heated bath as a function of the filling level of the evaporator flask.

9. A method according to any of the preceding claims, further comprising the step: Additional dosing of medium for the heated bath as a function of the filling level of the evaporator flask and/or as a function of the level of the heated bath.

## Revendications

1. Évaporateur rotatif (1) comprenant un piston d'évaporation (10) et un bain de chauffage (20), le piston d'évaporation (10) pouvant être immergé dans le bain de chauffage (20), comprenant en outre un dispositif de commande d'immersion (40) pour commander la profondeur d'immersion du piston d'évaporation (10) dans le bain de chauffage (20), le dispositif de commande d'immersion (40) étant agencé pour déterminer le niveau (25) du bain de chauffage (20) et
le dispositif de commande d'immersion (40) étant agencé pour commander la profondeur d'immersion du piston d'évaporation (10) dans le bain de chauffage (20) en fonction du niveau (25) du bain de chauffage (20)
le dispositif de commande d'immersion (40) étant agencé pour déterminer le fond du bain de chauffage (20) et
dans lequel le dispositif de commande d'immersion (40) est agencé pour commander la profondeur d'immersion du piston d'évaporation (10) dans le bain de chauffage (20) en fonction du fond du bain de chauffage (20),
le dispositif de commande d'immersion (40) présentant des capteurs (45) permettant de déterminer le niveau (25) du bain de chauffage (20),
l'évaporateur rotatif (1) comprenant un dispositif de déplacement (35) pour le déplacement vertical du piston d'évaporation (10) et un dispositif pour le basculement du piston d'évaporation (10) par rapport à l'horizontale.

2. Évaporateur rotatif (1) selon la revendication 1, dans lequel le dispositif de commande d'immersion (40) est conçu pour déterminer le niveau de remplissage (15) du piston d'évaporation (10), et
le dispositif de commande d'immersion (40) étant conçu pour commander la profondeur d'immersion du piston d'évaporation (10) dans le bain de chauffage (20) en fonction du niveau de remplissage (15) du piston d'évaporation (10).

3. Évaporateur rotatif (1) selon l'une des revendications précédentes, dans lequel le dispositif de commande d'immersion (40) comporte des capteurs (45) qui permettent en outre de déterminer le niveau de remplissage (15) du piston d'évaporation (10) du bain de chauffage (20).

4. Évaporateur rotatif (1) selon la revendication 3, dans lequel les capteurs (45) fonctionnent selon un ou plusieurs des principes suivants : optique, mécanique, thermoélectrique, résistif, piézoélectrique, capacitif, inductif, magnétique.

5. Évaporateur rotatif (1) selon l'une des revendications 3 ou 4, dans lequel les capteurs (45) comprennent un ou plusieurs éléments du groupe suivant : barrière lumineuse, capteur de poids, photocapteur, caméra, LED infrarouge, capteur à ultrasons, émetteur et récepteur de micro-ondes, capteur radar, capteur d'humidité, jauge de niveau, flotteur, capteur de niveau, capteur de vibration, système de pilotage électromécanique, capteur de pression, capteur de conductivité, capteur de température.

6. Procédé de commande d'un évaporateur rotatif (1), l'évaporateur rotatif comprenant un piston d'évaporation (10) et un bain de chauffage (20), le piston d'évaporation (10) pouvant être immergé dans le bain de chauffage (20), comprenant en outre un dispositif de commande d'immersion (40) pour commander la profondeur d'immersion du piston d'évaporation (10) dans le bain de chauffage (20), avec les étapes suivantes :
détermination du niveau de remplissage (15) du piston d'évaporation (10) Détermination du niveau (25) du bain de chauffage (20)
commande de la profondeur d'immersion du piston d'évaporation (10) dans le bain de chauffage (20) en fonction du niveau de remplissage (15) du piston d'évaporation (10) et en fonction du niveau (25) du bain de chauffage (20), détermination du fond du bain de chauffage
commande de la profondeur d'immersion du piston d'évaporation dans le bain de chauffage en fonction du fond du bain de chauffage, détermination du niveau (25) du bain de chauffage (20) par un capteur (45') et déplacement vertical et basculement du piston d'évaporation (10) par rapport à l'horizontale en fonction du niveau (25) du bain de chauffage (20).

7. Procédé de commande d'un évaporateur rotatif (1) selon la revendication 8, dans lequel le dispositif de commande d'immersion (40) comprend des capteurs (45), le procédé comprenant les étapes suivantes :
déterminer le niveau de remplissage (15) du piston d'évaporation (10) par un capteur (45),
commande de la profondeur d'immersion du piston d'évaporation (10) dans le bain de chauffage (20) en fonction du niveau de remplissage (15) du piston d'évaporation (10) et en fonction du niveau (25) du bain de chauffage (20).

8. Procédé selon l'une quelconque des revendications de procédé précédentes, comprenant en outre les étapes consistant à :
détermination du niveau de remplissage du ballon d'évaporation
commande de la profondeur d'immersion du ballon d'évaporation dans le bain de chauffage en fonction du niveau de remplissage du ballon d'évaporation.

9. Procédé selon l'une quelconque des revendications précédentes, comprenant en outre l'étape consistant à : dosage complémentaire de fluide pour le bain de chauffage en fonction du niveau de remplissage du ballon d'évaporation et/ou en fonction du niveau du bain de chauffage.
